# EUROPÄISCHE PATENTSCHRIFT

(11) **EP 1 324 868 B1**
(45) Veröffentlichungstag und Bekanntmachung des Hinweises auf die Patenterteilung: **10.11.2004**
(21) Anmeldenummer: 01971711.5
(22) Anmeldetag: 12.09.2001
(51) Int. Cl.: B29C 45/17

(54) **FORMSCHLIESSEINRICHTUNG FÜR SPRITZGIESSMASCHINEN**
MOLD CLOSING DEVICE FOR INJECTION MOLDING MACHINES
DISPOSITIF DE FERMETURE DE MOULE POUR MACHINES DE MOULAGE PAR INJECTION

(30) Priorität: 10.10.2000 DE 10050966; 19.04.2001 DE 10120171
(43) Veröffentlichungstag der Anmeldung: 09.07.2003
(73) Patentinhaber: Demag Ergotech GmbH, 90571 Schwaig (DE)
(72) Erfinder: KRÜGER, Jens, 91056 Erlangen (DE); KASTEL, Rudolf, 90482 Nürnberg (DE)
(74) Vertreter: Meissner, Peter E., Dipl.-Ing.
(86) Internationale Anmeldenummer: PCT/DE2001/003533
(87) Internationale Veröffentlichungsnummer: WO 2002/030650

(56) Entgegenhaltungen:
- EP-A- 0 310 807
- FR-A- 2 665 105
- US-A- 5 328 346

## Beschreibung

Die Erfindung betrifft eine Formschließeinrichtung für Spritzgießmaschinen, insbesondere für Kunststoffe mit einem auf Schienen bewegbaren Maschinenschlitten, an dem Führungsschuhe vorgesehen sind.
Die Werkzeughälften einer Spritzgießmaschine werden an Aufspannplatten befestigt, von denen eine starr angeordnet und die andere auf dem Maschinenschlitten verfahrbar ist.
Nach der Befestigung der Werkzeughälften und vor dem Gießvorgang werden die Aufspannplatten aufeinander zu bewegt, bis die Werkzeughälften aneinanderliegen, woraufhin das Werkzeug mittels Druck, vorzugsweise hydraulisch erzeugt, vollständig schließt.
Die Führung des bewegbaren Maschinhenschlittens erfolgt bekanntermaßen mittels an dessen Basis angebrachter Führungsschuhe, die auf unter dem Schlitte liegenden Schienen laufen. In Laufrichtung gesehen können dabei hintereinander auf einer Schiene zwei oder mehr Laufschuhe angeordnet sein.
Wenn die Werzeughälften schließen, kann es durch die hohe Schließkraft zu Verformungen des beweglichen Maschinenschlittens und /oder der Führungsschienen und schlimmstenfalls zu irreparablen Schäden an den Werkzeugen kommen.
Es ist bereits versucht worden, durch zusätzlich an der beweglichen Aufspannplatte seitlich angebrachte Führungsschienen die Verformung zu verhindern. Ein solches starres System ist einerseits nicht gut geeignet, die Verformungskräfte abzubauen und andererseits ergibt sich durch diese Maßnahme eine zusätzliche Verbreiterung der Maschine, was möglichst vermieden werden soll.

Um für den gesamten Spritzgießprozeß eine präzise und funktionssichere Gleitschlittenführung zu schaffen und die auf dem Gleitschlitten befindliche bewegliche Werkzeugaufspannplatte gegenüber der festen Werkzeugaufspannplatte in allen Koordinaten unabhängig vom Gleitschlitten zur festen Werkzeugaufspannplatte einstellbar bzw. rückstellbar zu gestalten, werden gemäß DE 41 41 259 C2 bei einer Formschließeinrichtung für Spritzgießmaschinen mit einer festen Werkzeugaufspannplatte und einer auf einem Gleitschlitten mit zwei Gleitschuhen und einem biegesteifen Verbindungsteil beweglichen Werkzeugaufpannplatte seitlich am Gleitschlitten Seitenführungsrollen angeordnet, die am Maschinengestell abstützbar sind, wobei die Seitenführungsrollen über drehbare Exzenterbolzen, die am Gleitschlitten lösbar befestigt sind, einstellbar sind. Der Gleitschlitten und die bewegliche Werkzeugaufspannplatte sind über mindestens drei Stützen, die als Biegedruckstäbe ausgebildet sind, und über einen zur Maschinenlängsachse quer verschiebbaren vertikalen Drehzapfen beweglich zueinander verbunden, wobei zwischen dem Gleitschlitten und der beweglichen Werkzeugaufspannplatte ein Luftspalt vorhanden ist. Der Gleitschlitten und die bewegliche Werkzeugaufspannplatte sind durch Befestigungsschrauben, die im Bereich der Randzonen der Maschinenlängsachse und in der Nähe der Vorderkante und der Hinterkante von der beweglichen Werkzeugaufspannplatte angeordnet sind, lösbar miteinander befestigt.

Die Schrift DE 44 03 079 C1 offenbart eine Formschließeinrichtung für Kunststoff-Spritzgießmaschinen zur Aufnahme großer und schwerer Formwerkzeuge. Für die Wälzführung ist eine Lastausgleicheinrichtung und eine Lastbegrenzungseinrichtung vorgesehen, die eine sichere Auflage in allen Betriebszuständen gewährleistet und bei der im statischen Betriebszustand bei geschlossenem Formwerkzeug durch eine Lastbegrenzungseinrichtung die Wälzführung vor Überbelastung geschützt wird. Als Wälzführung werden Rollenumlaufschuhe verwendet, die in Pendeltraversen längs und quer drehbeweglich sind. Die vorderen Pendeltraversen sind an der Unterseite des Maschinenschlittens direkt in Gleitlagern, die hinteren Pendeltraversen sind zusammen mit einem Tragrahmen auf je einem Exzenter einer Exzenterwelle gelagert, die beide über einen Torsionsstab verbunden sind. Die Lastausgleichsbewegung wird über den Torsionsstab erreicht. Die Lastbegrenzung erfolgt, indem die Pendeltraversen bei Belastung durchfedern und die Tragrahmen und der Maschinenschlitten mit ihren Druckplatten auf dem Maschinengestell aufsetzen.

Der Erfindung lag die Aufgabe zugrunde, auf eine unkomplizierte Weise die durch unterschiedlich hohe Schließkräfte auftretenden Verformungskräfte der beweglichen Werkzeugaufspannplatte abzufangen und ein Verklemmen der Gleitelemente mit der Führungsschiene zu verhindern.

Die Lösung der Aufgabe erfolgt entsprechend den Merkmalen des Anspruchs 1.
Zweckmäßige Ausgestaltungen sind in den Unteransprüchen angegeben.

Erfindungsgemäß kommt ein konsolförmiges Biegeelement zum Einsatz, das senkrecht zur Führungsschiene steif und in Achsrichtung mindestens in einem Biegebereich eine vorgebbare Elastizität aufweist.

Das Biegeelement kann dabei als Gußteil oder auch als Schweißkonstruktion ausgestaltet sein. In beiden Fällen ist im Nahbereich zur beweglichen Werkzeugaufspannplatte ein Biegebereich vorgesehen, der als Materialverjüngung oder als freier Bereich des mit dem Führungsschuh innig verbundenen konsolförmigen Biegeelements ausgestaltet ist.

In einer vorteilhaften Ausgestaltung der Erfindung sind die konsölförmigen Biegeelemente bei Draufsicht auf die bewegliche Werkzeugaufspannplatte fußendig innerhalb der Breitenausdehnung angeordnet.
Als mit dem Führungsschuh verbundene Lager werden mit innenliegenden Rollen versehene Lager vorgeschlagen.
Die Erfindung soll an einem Ausführungsbeispiel anhand der beigefügten Zeichnungen erläutert werden.

In den Zeichnungen zeigen:
- Figur 1:: eine Draufsicht auf die bewegliche Werkzeugaufspannplatte,
- Figur 2:: eine Seitenansicht. der beweglichen Werkzeugaufspannplatte,
- Figur 3:: eine Gußkonstruktion des konsolförmigen Biegeelementes,
- Figur 4:: eine Schweißkonstruktion des konsolförmigen Biegeelementes.

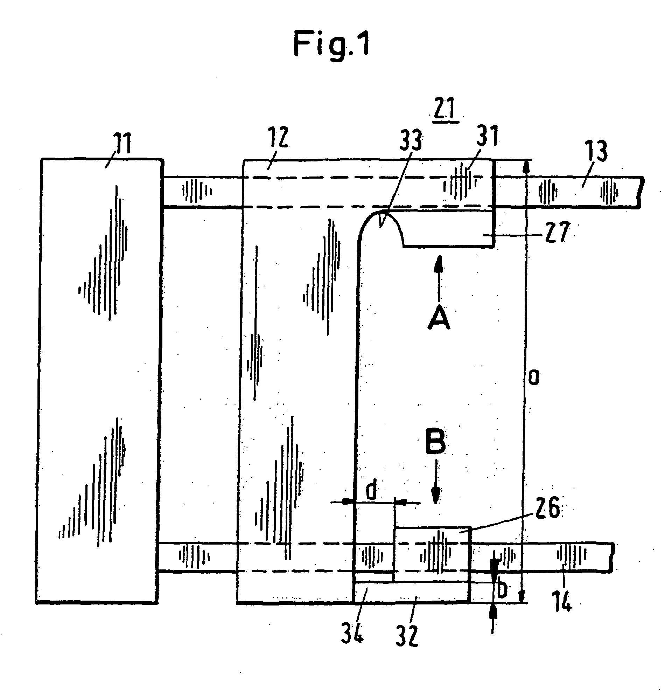

Die Figur 1 zeigt eine Draufsicht auf die feste Werkzeugaufspannplatte 11 und die bewegliche Werkzeugaufspannplatte 12 sowie die mit einem nicht dargestellten Maschinenbett angeordneten Schienen 13, 14, auf denen die bewegliche Werkzeugaufspannplatte 12 verfahrbar ist.
Diese besitzt dazu einen an der von der festen Werkzeugaufspannplatte 11 abgewandten Seite angeordneten Maschinenschlitten 21.
Der obere Teil des Bildes stellt die Draufsicht auf eine Gußkonstruktion des konsolförmigen Biegeelementes 31, an dem ein Führungsschuh 27 angeordnet ist, dar. Im Nahbereich der Außenwandung der beweglichen Werkzeugaufspannplatte 12 ist ein Biegebereich 33 vorgesehen.
Im unteren Teil der Figur 1 ist eine Schweißkonstruktion des konsolförmigen Biegeelementes 32 dargestellt, an dem in einem Abstand d von der beweglichen Werkzeugaufspannplatte 12 ein Führungsschuh 26 vorgesehen ist, wobei ein Biegebereich 34 des Biegeelements 32, das die Breite b besitzt, belassen wird.
Die Schienen 13 und 14 sind so angeordnet, dass sie sich innerhalb der Breitenausdehnung a der beweglichen Werkzeugaufspannplatte 12 befinden.

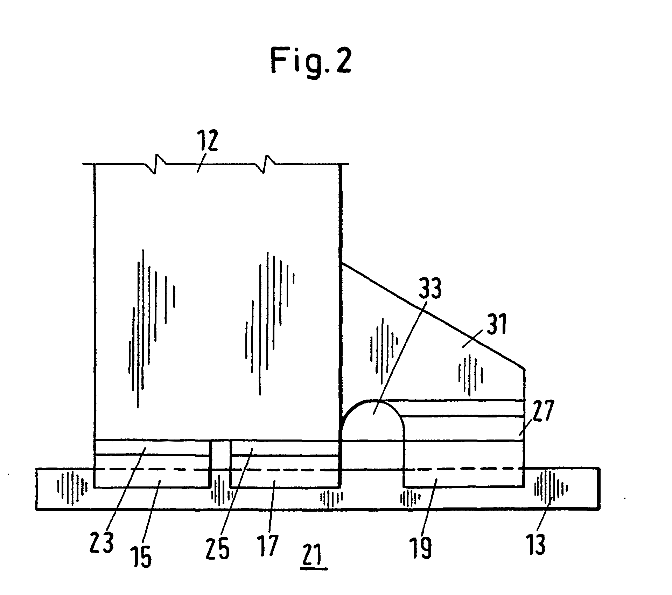

Bei der Figur 2 sind am Fußende der beweglichen Werkzeugaufspannplatte 12 die Führungsschuhe 23, 25 und an dem konsolförmigen Biegeelement 31 der Führungsschuh 27 vorgesehen. An den Führungsschuhen 23, 25 und 27 sind die Lager, 15, 17 und 19 angeordnet, die mit der Führungsschiene 13 korrespondieren.
Die Lager 15, 17 und 19 sind vorzugsweise mit innenliegenden Rollen ausgestattet.
An dem konsolförmigen Biegeelement 31 ist ein Biegebereich 33 unmittelbar anschließend an die Außenwandung der beweglichen Werkzeugaufspannplatte 12 vorgesehen.

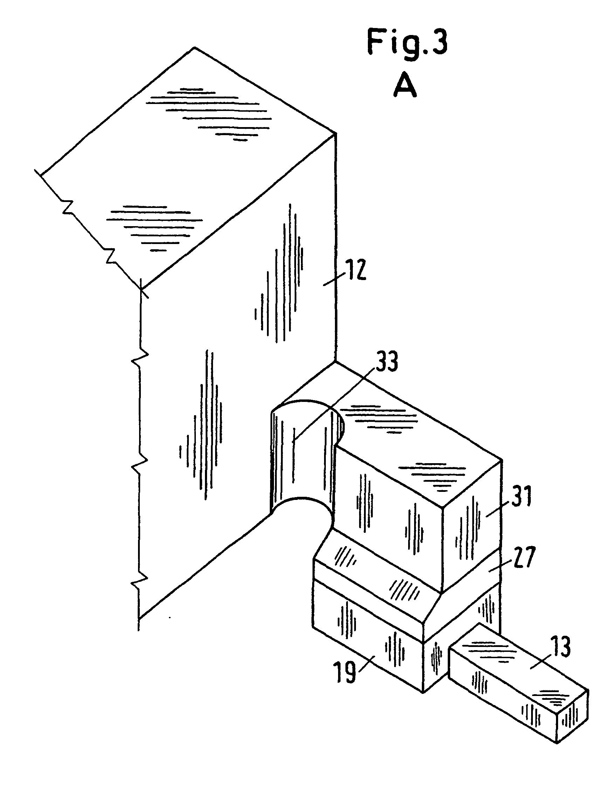

In der Figur 3 ist (als Ansicht A gemäß Fig. 1) ein konsolförmiges Biegeelement 31 als Gußelement innig mit der beweglichen Werkzeugaufspannplatte 12 verbunden. Im Nahbereich der Werkzeugaufspannplatte 12 ist eine in etwa halbkreisförmige Ausbuchtung vorgesehen, die den Biegebereich 33 des konsolförmigen Biegeelementes 31 darstellt. Außerhalb des Biegebereiches 33 ist ein Führungsschuh 27 vorgesehen, an dem ein mit der Schiene 13 korrespondierendes Lager 19 angeordnet ist.

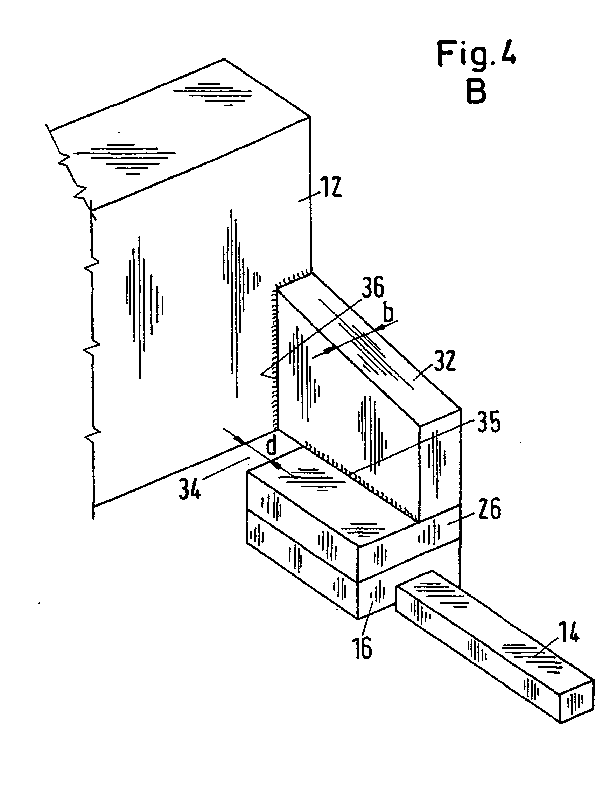

Die Figur 4 zeigt (als Ansicht B gemäß. Fig 1) ein als Schweißkonstruktion ausgestaltetes konsolförmiges Biegeelement 32, das aus einer Platten mit der Breite b besteht. Das annähernd die Form eines rechtwinkligen Dreiecks aufweisende konsolförmige Biegeelement 32 ist mit einer Kathete 36 an die bewegliche Werkzeugaufspannplatte 12 angeschweißt. An der anderen Kathete 35 ist ein Führungsschuh 26 angeschweißt, an dem ein Lager 16 befestigt ist, welches mit einer Schiene 14 korrespondiert.

Der Führungsschuh 26 ist in einem Abstand d, der den Biegebereich 34 bildet, von der Außenwand der beweglichen Werkzeugaufspannplatte 12 entfernt angeordnet.
Der Abstand d wird vorzugsweise mit d > 2 x b gewählt.

### Positionsliste

### Formschließen

- 11: feste Werkzeugaufspannplatte
- 12: bewegliche Werkzeugaufspannplatte
- 13, 14: Schiene
- 15, 16, 17, 19: Lager

### Führen

- 21: Maschinenschlitten
- 23, 25; 26, 27: Führungsschuh

### Biegen

- 31, 32: konsolförmiges, etwa rechtwinkliges Biegeelement
- 33, 34: Biegebereich
- 35, 36: Katheten des etwa rechtwinkligen Biegeelementes

- a: Breite der Werkzeugaufspannplatte 12
- b: Dicke des Biegeelementes 32
- d: Distanz des Führungsschuhs 26 zur Werkzeugaufspannplatte 12

## Patentansprüche

1. Formschließeinrichtung für Spritzgießmaschinen, insbesondere für Kunststoffe, mit einem auf Schienen bewegbaren Maschinenschlitten, an dem Führungsschuhe vorgesehen sind,
**dadurch gekennzeichnet,**
**dass** an der der festen Werkzeugaufspannplatte (11) abgewandten Seite an beiden Ecken der beweglichen Werkzeugaufspannplatte (12) je ein Führungsschuh (26, 27) über ein konsolförmiges Biegeelement (31, 32) mit dieser verbunden ist,
**dass** das Biegeelement (31, 32) eine Form aufweist, wodurch es senkrecht zur Führungsschiene (13, 14) steif ist und in Achsrichtung mindestens in einem Biegebereich (33, 34) eine vorgebbare Elastizität aufweist.

2. Formschließeinrichtung nach Anspruch 1,
**dadurch gekennzeichnet,**
**dass** die konsolförmigen Biegeelemente (31, 32) bei Draufsicht auf die bewegliche Werkzeugaufspannplatte (12) fußendig innerhalb der Breitenausdehnung (a) der beweglichen Werkzeugaufspannplatte (12) angeordnet sind.

3. Formschließeinrichtung nach Anspruch 1,
**dadurch gekennzeichnet,**
**dass** an dem Führungsschuh (26, 27) mit den Führungsschienen (13, 14) korrespondierende Lager (15, 16) befestigt sind, dass die Lagerung in einem Abstand d > 2 x b von der beweglichen Aufspannplatte (12) beginnt,
wobei bedeutet: b = Breite des Biegeelements (31, 32).

4. Formschließeinrichtung nach einem der vorhergehenden Ansprüche,
**dadurch gekennzeichnet,**
**dass** das konsolförmige Biegeelement (31, 32) annähernd die Form eines rechtwinkligen Dreiecks aufweist, wobei die eine Kathete (35) über den Führungsschuh (26) mit dem Lager (15, 16) lösbar und die andere Kathete (36) mit der beweglichen Werkzeugaufspannplatte (12) innig verbunden ist.

5. Formschließeinrichtung nach einem der vorhergehenden Ansprüche,
**dadurch gekennzeichnet,**
**dass** im Nahbereich der beweglichen Werkzeugaufspannplatte (12) das Biegeelement (31, 32) eine parallel zur Werkzeugaufspannplatte (12) verlaufende Materialverjüngung als Biegebereich (33, 34) aufweist.

6. Formschließeinrichtung nach einem der vorhergehenden Ansprüche,
**dadurch gekennzeichnet,**
**dass** das Biegeelement (31, 32) ein als Teil der beweglichen Werkzeugaufspannplatte (12) ausgebildestes Gußteil ist.

7. Formschließeinrichtung nach einem der vorhergehenden Ansprüche,
**dadurch gekennzeichnet,**
**dass** das Biegeelement (31, 32) aus einer Stahlplatte besteht, die durch Schweißen mit dem Führungsschuh (26) und mit der beweglichen Werkzeugaufspannplatte (12) verbunden ist.

8. Formschließeinrichtung nach Anspruch 3,
**dadurch gekennzeichnet,**
**dass** am Führungsschuh (26, 27) ein mit innen liegenden Rollen versehenes Lager (15, 16) befestigt ist.

## Claims

1. A mould closing means for injection-moulding machines, in particular for plastics materials, with a machine slide movable on rails, on which slide guide shoes are provided,
**characterised in that**
one guide shoe (26, 27) in each case is connected to the movable platen (12) via a bracket-like bending element (31, 32) on the side remote from the fixed platen (11) at both corners of the movable platen,
that the bending element (31, 32) is of a shape which makes it rigid perpendicular to the guide rail (13, 14) and has a predeterminable elasticity in the axial direction at least in one bending region (33, 34).

2. A mould closing means according to Claim 1,
**characterised in that**
the bracket-like bending elements (31, 32), when viewing the movable platen (12) from the top, are arranged at the bottom end within the width (a) of the movable platen (12).

3. A mould closing means according to Claim 1,
**characterised in that**
bearings (15, 16) corresponding to the guide rails (13, 14) are fastened to the guide shoe (26, 27), and that the bearing action begins at a distance d > 2 x b from the movable platen (12), where: b = width of the bending element (31, 32).

4. A mould closing means according to one of the preceding claims,
**characterised in that**
the bracket-like bending element (31, 32) is approximately in the form of a right-angled triangle, one short side (35) being detachably connected to the bearing (15, 16) via the guide shoe (26) and the other short side (36) being intimately connected to the movable platen (12).

5. A mould closing means according to one of the preceding claims,
**characterised in that**
in the near vicinity of the movable platen (12) the bending element (31, 32) has a tapering of material extending parallel to the platen (12) as a bending region (33, 34).

6. A mould closing means according to one of the preceding claims,
**characterised in that**
the bending element (31, 32) is a cast piece formed as part of the movable platen (12).

7. A mould closing means according to one of the preceding claims,
**characterised in that**
the bending element (31, 32) consists of a steel plate connected to the guide shoe (26) and to the movable platen (12) by welding.

8. A mould closing means according to Claim 3,
**characterised in that**
a bearing (15, 16) provided with internal rollers is fastened to the guide shoe (26, 27).

## Revendications

1. Dispositif de fermeture de moule pour machines de moulage par injection, en particulier pour matières plastiques, avec un coulisseau de machine mobile sur rails sur lequel des patins de guidage sont prévus,
**caractérisé en ce que**, du côté opposé à la plaque de serrage de moule fixe (11) aux deux angles de la plaque de serrage de moule mobile (12), un patin de guidage (26, 27) est relié à celle-ci par l'intermédiaire d'un élément de flexion en forme de console (31, 32), **en ce que** l'élément de flexion (31, 32) présente une forme par laquelle il est rigide perpendiculairement au rail de guidage (13, 14) et présente dans la direction axiale, au moins dans une zone de flexion (33, 34), une élasticité prédéterminée.

2. Dispositif de fermeture de moule selon la revendication 1,
**caractérisé en ce que**, dans une vue de dessus de la plaque de serrage de moule mobile (12), les éléments de flexion en forme de console (31, 32) sont disposés côté pied à l'intérieur de l'étendue en largeur (a) de la plaque de serrage de moule mobile (12).

3. Dispositif de fermeture de moule selon la revendication 1,
**caractérisé en ce que** des paliers (15, 16) en correspondance avec les rails de guidage (13, 14) sont fixés sur le patin de guidage (26, 27), **en ce que** la disposition des paliers commence à une distance d > 2 x b de la plaque de serrage mobile (12), b étant la largeur de l'élément de flexion (31, 32).

4. Dispositif de fermeture de moule selon l'une des revendications précédentes,
**caractérisé en ce que** l'élément de flexion en forme de console (31, 32) présente pratiquement la forme d'un triangle rectangle, un côté de l'angle droit (35) étant relié de manière séparable au palier (15, 16) par l'intermédiaire du patin de guidage (26) et l'autre côté de l'angle droit (36) étant relié intimement à la plaque de serrage de moule mobile (12).

5. Dispositif de fermeture de moule selon l'une des revendications précédentes,
**caractérisé en ce que** l'élément de flexion (31, 32) présente, dans la zone proche de la plaque de serrage de moule mobile (12), comme zone de flexion (33, 34) un amincissement de matière s'étendant parallèlement à la plaque de serrage de moule (12).

6. Dispositif de fermeture de moule selon l'une des revendications précédentes,
**caractérisé en ce que** l'élément de flexion (31, 32) est une pièce moulée conçue comme partie de la plaque de serrage de moule mobile (12).

7. Dispositif de fermeture de moule selon l'une des revendications précédentes,
**caractérisé en ce que** l'élément de flexion (31, 32) est constitué d'une plaque d'acier qui est reliée par soudage au patin de guidage (26) et à la plaque de serrage de moule mobile (12).

8. Dispositif de fermeture de moule selon la revendication 3,
**caractérisé en ce qu'**un palier (15, 16) muni de rouleaux situés à l'intérieur est fixé sur le patin de guidage (26, 27).
